# EUROPÄISCHE PATENTSCHRIFT

(11) **EP 2 603 413 B1**
(45) Veröffentlichungstag und Bekanntmachung des Hinweises auf die Patenterteilung: **09.09.2015**
(21) Anmeldenummer: 11743807.7
(22) Anmeldetag: 01.08.2011
(51) Int. Cl.: B62D 15/02, G06T 15/20, G05D 1/02, G06K 9/00, G08G 1/16

(54) **VERFAHREN ZUR UNTERSTÜTZUNG EINES PARKVORGANGS EINES KRAFTFAHRZEUGS, FAHRERASSISTENZSYSTEM UND KRAFTFAHRZEUG**
METHOD FOR SUPPORTING A PARKING PROCEDURE OF A MOTOR VEHICLE, DRIVER ASSISTANCE SYSTEM, AND MOTOR VEHICLE
PROCÉDÉ D'ASSISTANCE À UNE MANOEUVRE DE STATIONNEMENT D'UN VÉHICULE À MOTEUR, SYSTÈME D'AIDE À LA CONDUITE, ET VÉHICULE À MOTEUR

(30) Priorität: 12.08.2010 DE 102010034139
(43) Veröffentlichungstag der Anmeldung: 19.06.2013
(73) Patentinhaber: Valeo Schalter und Sensoren GmbH, 74321 Bietigheim-Bissingen (DE)
(72) Erfinder: MATHES, Joachim, 74080 Heilbronn (DE); REILHAC, Patrice, 73732 Esslingen (DE)
(86) Internationale Anmeldenummer: PCT/EP2011/063182
(87) Internationale Veröffentlichungsnummer: WO 2012/019932

(56) Entgegenhaltungen:
- EP-A1- 1 179 958
- WO-A1-2009/139281
- DE-A1-102006 055 372
- US-A1- 2007 299 584
- US-A1- 2008 007 618
- US-A1- 2009 079 828

## Beschreibung

Die Erfindung betrifft ein Verfahren zur Unterstützung eines Parkvorgangs eines Kraftfahrzeugs mittels eines Fahrerassistenzsystems. Die Unterstützung erfolgt durch Bestimmen einer Parkbahn, entlang welcher das Kraftfahrzeug in eine Parklücke (kollisionsfrei) eingeparkt oder aus dieser ausgeparkt wird, sowie durch Erfassen von Bilddaten über eine Umgebung des Kraftfahrzeugs durch zumindest eine optische Erfassungseinrichtung des Fahrerassistenzsystems. Die Bilddaten werden zu einem Bild verarbeitet, welches eine perspektivische Ansicht zumindest eines Umgebungsbereichs neben dem Kraftfahrzeug zeigt. Das Bild wird auf einer Anzeigeeinrichtung angezeigt. Die Erfindung betrifft außerdem ein Fahrerassistenzsystem zum Durchführen eines solchen Verfahrens, wie auch ein Kraftfahrzeug mit einem derartigen Fahrerassistenzsystem.

Es sind bereits Parkassistenzsysteme bzw. Fahrerassistenzeinrichtungen aus dem Stand der Technik bekannt, welche den Fahrer beim Durchführen von Einpärkvorgängen unterstützen. Diese Unterstützung besteht wenigstens darin, dass in Abhängigkeit von einer aktuellen relativen Position des Kraftfahrzeugs bezüglich einer erkannten potentiellen Parklücke eine Parkbahn durch das Fahrerassistenzsystem berechnet wird, entlang welcher das Kraftfahrzeug in die Parklücke kollisionsfrei eingeparkt werden kann. Bei einfachsten Parkassistenzsystemen werden dann Informationen bzw. Hinweise ausgegeben, wie der Fahrer zu lenken hat, damit das Kraftfahrzeug entlang der berechneten Parkbahn eingeparkt werden kann. Es sind auch Systeme bekannt, bei denen es dem Fahrer zugeteilt ist, Gas zu geben und zu bremsen, während ein Lenken und somit ein Einschlagen der lenkbaren Räder des Kraftfahrzeugs automatisch und somit fahrerunabhängig durchgeführt wird. Bei vollständig autonomen bzw. automatischen Parkassistenzsystemen greift das System auch in den Antriebsstrang des Fahrzeugs ein; der Fahrer muss den autonomen Parkvorgang lediglich freigeben und kann den Parkvorgang auch jederzeit unterbrechen.

Ein Parkassistenzsystem ist beispielsweise aus der Druckschrift WO 2008/055567 A1 bekannt.

Es ist außerdem Stand der Technik, Bilder von einer Umgebung des Kraftfahrzeugs auf einer Anzeigeeinrichtung im Innenraum des Kraftfahrzeugs anzuzeigen. Der neueste Trend geht dahin, die Bilddaten einer Vielzahl von Kameras zu einem solchen Bild zusammen zu verarbeiten, welches eine Draufsicht auf das Kraftfahrzeug sowie die Umgebung um das Kraftfahrzeug herum zeigt. Dabei ist das Abbild des Kraftfahrzeugs vorgespeichert, während das Abbild der Umgebung fortlaufend aus den kontinuierlich erfassten Bilddaten dynamisch jeweils neu erzeugt wird. Das Kraftfahrzeug sowie seine Umgebung werden in einem solchen Bild aus einer Vogelperspektive gezeigt: Eine solche Vorgehensweise ist beispielsweise aus dem Dokument EP 1 179 958 A1 als bekannt zu entnehmen. Im Gegenstand gemäß dieser Druckschrift kann auch eine Blickrichtung, aus welcher das Kraftfahrzeug und die Umgebung gezeigt werden, in Abhängigkeit von dem jeweils augenblicklichen Fahrzustand des Kraftfahrzeugs verändert werden. Beispielsweise kann die Blickrichtung in Abhängigkeit von der Fahrzeuggeschwindigkeit oder aber in Abhängigkeit von einem aktuellen Lenkwinkel eingestellt werden.

DE102006055372 A1 ist als nächstliegender Stand der Technik zu sehen und offenbart ein Verfahren zur Unterstützung eines Parkvorgangs eines Kraftfahrzeugs mittels eines Fahrerassistenzsystems durch
- Bestimmen einer Parkbahn, entlang welcher das Kraftfahrzeug in eine Parklücke eingeparkt oder aus der Parklücke ausgeparkt wird,
- Erfassen von Bilddaten über eine Umgebung des Kraftfahrzeugs durch zumindest eine optische Erfassungseinrichtung des Fahrerassistenzsystems,
- Verarbeiten der Bilddaten zu einem Bild, welches eine perspektivische Ansicht zumindest eines Umgebungsbereichs neben dem Kraftfahrzeug zeigt, und Anzeigen des Bildes auf einer Anzeigeeinrichtung, wobei das Bild unter Berücksichtigung einer aktuellen Position des Kraftfahrzeugs erzeugt wird.

Es ist Aufgabe der Erfindung, eine Lösung aufzuzeigen, wie bei einem Verfahren der eingangs genannten Gattung der Fahrer beim Durchführen eines Parkvorgangs besonders zuverlässig und benutzerfreundlich durch das Fahrerassistenzsystem unterstützt werden kann.

Diese Aufgabe wird erfindungsgemäß durch ein Verfahren mit den Merkmalen gemäß Patentanspruch 1, wie auch durch ein Fahrerassistenzsystem mit den Merkmalen gemäß Patentanspruch 11 sowie durch ein Kraftfahrzeug mit den Merkmalen des Patentanspruchs 12 gelöst. Vorteilhafte Ausführungen der Erfindung sind Gegenstand der abhängigen Patentansprüche und der Beschreibung.

Bei einem erfindungsgemäßen Verfahren zur Unterstützung eines Parkvorgangs eines Kraftfahrzeugs wird eine Parkbahn durch ein Fahrerassistenzsystem bestimmt, entlang welcher das Kraftfahrzeug in eine Parklücke kollisionsfrei eingeparkt oder aus dieser Parklücke ausgeparkt werden kann. Es werden Bilddaten über eine Umgebung des Kraftfahrzeugs durch zumindest eine optische Erfassungseinrichtung - etwa eine Kamera - des Fahrerassistenzsystems erfasst. Die Bilddaten werden durch das Fahrerassistenzsystem zu einem Bild verarbeitet, welches eine perspektivische Ansichtinsbesondere eine Draufsicht von oberhalb des Kraftfahrzeugs - zumindest eines Umgebungsbereichs neben dem Kraftfahrzeug zeigt. Das Bild wird auf einer Anzeigeeinrichtung des Fahrerassistenzsystems angezeigt. Ein wesentlicher Gedanke der Erfindung besteht darin, dass das Bild unter Berücksichtigung einer aktuellen Position des Kraftfahrzeugs auf der Parkbahn erzeugt wird.

Der erfindungsgemäße Effekt wird also dadurch erzielt, dass beim Erzeugen des Bildes aus den Bilddaten die jeweils augenblickliche Position des Kraftfahrzeugs auf der berechneten Parkbahn berücksichtigt wird bzw. das Bild in Abhängigkeit von der jeweils aktuellen relativen Position des Kraftfahrzeugs bezüglich der Parklücke erzeugt wird. Auf diese Weise kann der Fahrer besonders zuverlässig und benutzerfreundlich beim Durchführen von Parkvorgängen unterstützt werden. Das Bild kann nämlich in Abhängigkeit von der Position des Kraftfahrzeugs jeweils unterschiedliche Bereiche neben dem Kraftfahrzeug zeigen, so dass der Fahrer unterschiedliche Bilder der Umgebung angezeigt bekommt, nämlich je nach der aktuellen Position auf der Parkbahn. Es kann somit der jeweils relevante Bereich neben dem Kraftfahrzeug aus der jeweils besten Perspektive angezeigt werden.

Im Allgemeinen wird wenigstens ein Parameter bzw. wenigstens eine Eigenschaft des Bildes unter Berücksichtigung der jeweils aktuellen Position des Kraftfahrzeugs relativ zur Parklücke eingestellt werden. Erfindungsgemäß wird dies eine Blickrichtung und/oder ein Blickpunkt sein, aus welcher bzw. welchem die perspektivische Ansicht gezeigt wird. Bei dieser Ausführungsform wird/werden also die Blickrichtung und/oder der Blickpunkt in Abhängigkeit von der aktuellen Position des Kraftfahrzeugs auf der Parkbahn eingestellt. Dies hat den Vorteil, dass je nach Position des Kraftfahrzeugs die jeweils optimale Perspektive eingestellt werden kann. Der Fahrer bekommt somit ein Bild angezeigt, welches den Umgebungsbereich und insbesondere auch das Kraftfahrzeug selbst aus einer solchen Blickrichtung bzw. aus einem solchen Blickpunkt zeigt, die bzw. der für eine optimale Sicht bzw. für eine optimale Darstellung sorgt. Beispielsweise kann zu Beginn eines Parkvorgangs - wenn sich das Kraftfahrzeug in einem Anfangsbereich der Parkbahn befindet - die Blickrichtung in Richtung der Parklücke zeigen, so dass die Parklücke aus einem Blickpunkt oberhalb des Kraftfahrzeugs dargestellt wird. Am Ende des Parkvorgangs hingegen kann das Kraftfahrzeug und seine Umgebung aus einer solchen Blickrichtung gezeigt werden, welche mit der Fahrzeughochachse zusammenfällt. Auf diese Weise wird dem Fahrer ermöglicht, ohne viel Aufwand auf die Abstände zwischen dem Kraftfahrzeug und den fahrzeugexternen, die Parklücke begrenzenden Objekten zurück zu schließen.

Unter einer "Blickrichtung" wird hier diejenige Richtung verstanden, aus welcher ein virtueller Betrachter beim Betrachten des Bildes blickt.

Ergänzend oder alternativ wird auch eine Größe des abgebildeten Umgebungsbereichs in Abhängigkeit von der aktuellen Position des Kraftfahrzeugs auf der Parkbahn eingestellt werden. Bei dieser Ausführungsform erfolgt mit anderen Worten eine Einstellung eines Zoomfaktors des Abbildes des Umgebungsbereichs. Dies kann beispielsweise so aussehen, dass zu Beginn des Parkvorgangs das Bild den Umgebungsbereich bis zu einer größeren Entfernung vom Kraftfahrzeug weg zeigt als am Ende des Parkvorgangs. Dann kann der Fahrer zu Beginn des Parkvorgangs auch solche Hindernisse sehen, die sich relativ weit weg vom Kraftfahrzeug befinden, nämlich beispielsweise in der Parklücke, so dass der Parkvorgang auch gegebenenfalls unterbrochen werden kann. Auf der anderen Seite kann der Fahrer dann am Ende des Parkvorgangs mit großer Genauigkeit die Abstände zwischen dem Kraftfahrzeug und den die Parklücke begrenzenden Hindernissen ermitteln. Eine solche Vorgehensweise sorgt also einerseits für einen sicheren Parkvorgang und andererseits auch für eine benutzerfreundliche Anzeige.

Bevorzugt werden die Bilddaten derart verarbeitet, dass das Bild von oberhalb des Kraftfahrzeugs eine Draufsicht zumindest auf den Umgebungsbereich neben dem Kraftfahrzeug zeigt. Mit anderen Worten zeigt das Bild bei dieser Ausführungsform den Umgebungsbereich und gegebenenfalls auch zumindest einen Bereich des Kraftfahrzeugs aus einer Vogelperspektive. Gerade dann wird dem Fahrer die Möglichkeit eingeräumt, den Umgebungsbereich zu überwachen und gegebenenfalls auch mit geringstem Aufwand auf die Abstände zwischen dem Kraftfahrzeug und fahrzeugexternen Objekten zurück zu schließen.

In einer Ausführungsform ist vorgesehen, dass für zumindest einen Abschnitt der Parkbahn das Bild zusätzlich zu dem Umgebungsbereich auch zumindest einen Bereich des Kraftfahrzeugs zeigt. Insbesondere zeigt das Bild für zumindest einen Abschnitt der Parkbahn eine Draufsicht auf das gesamte Kraftfahrzeug sowie den Umgebungsbereich um das Kraftfahrzeug herum. Dann kann der Fahrer in dem angezeigten Bild nicht nur die Umgebung, sondern auch das eigene Kraftfahrzeug betrachten; er kann auf die jeweils augenblickliche relative Position eines Hindernisses bezüglich des Kraftfahrzeugs zurück schließen.

In dem angezeigten Bild wird das Abbild des Kraftfahrzeugs vorzugsweise ortsfest bzw. stationär auf der Anzeigeeinrichtung dargestellt, während das Abbild des Umgebungsbereichs aus den Bilddaten jeweils neu erzeugt bzw. fortlaufend angepasst wird. Das Abbild des Kraftfahrzeugs ist bevorzugt vorgespeichert, nämlich in einem Speicher des Fahrerassistenzsystems. Durch die ortsfeste Darstellung des Kraftfahrzeugs kann jeweils der gleiche Umgebungsbereich neben dem Kraftfahrzeug dargestellt werden bzw. der Umgebungsbereich kann stets bis zu derselben Entfernung vom Kraftfahrzeug weg dargestellt werden.

Das Vermessen bzw. Erfassen einer Parklücke erfolgt in der Regel während einer Vorbeifahrt des Kraftfahrzeugs an der Parklücke. Gerade dann erweist es sich als besonders vorteilhaft, wenn der Fahrer auf der Anzeigeeinrichtung die Parklücke sehen kann. Während des Vorgangs des Erfassens der Parklücke - also insbesondere während einer Vorbeifahrt des Kraftfahrzeugs an der Parklücke - kann somit die perspektivische Ansicht aus einer solchen Blickrichtung gezeigt werden, dass in dem Bild die Parklücke in perspektivischer Darstellung gezeigt wird. Befindet sich die Parklücke noch vor dem Kraftfahrzeug, so kann die Blickrichtung eine Richtungskomponente der Fahrtrichtung des Kraftfahrzeugs sowie eine Richtungskomponente einer Querhalbachse des Kraftfahrzeugs aufweisen, nämlich insbesondere der rechten Querhalbachse beim Rechtsverkehr und der linken Querhalbachse beim Linksverkehr. Befindet sich hingegen die Parklücke - in Fahrtrichtung gesehen - bereits hinter dem Kraftfahrzeug, so kann die Blickrichtung eine Richtungskomponente entgegen der Fahrtrichtung sowie eine Richtungskomponente der genannten Querhalbachse aufweisen. Dann ist nämlich sichergestellt, dass die Parklücke stets in dem angezeigten Bild abgebildet ist und der Fahrer eine perspektivische Ansicht der Parklücke auf der Anzeigeeinrichtung sieht.

Befindet sich das Kraftfahrzeug in einem Anfangsbereich der Fahrbahn, so kann die perspektivische Ansicht aus einer solchen Blickrichtung gezeigt werden, die in Richtung eines Endes der Parkbahn bzw. in Richtung der Parklücke zeigt. Auch dann kann der Fahrer auf der Anzeigeeinrichtung eine perspektivische Ansicht der Parklücke betrachten.

Unterschreitet während des Vorgangs des Einparkens ein Restweg der Parkbahn ein vorgegebenes Minimum bzw. erreicht das Kraftfahrzeug einen vorgegebenen Endbereich der Parkbahn, so kann die perspektivische Ansicht aus einer solchen Blickrichtung gezeigt werden, die mit der Fahrzeughochachse zusammenfällt. Dann sieht der Fahrer auf der Anzeigeeinrichtung eine Draufsicht aus einem rechten Winkel auf den Umgebungsbereich sowie insbesondere auch auf das gesamte Kraftfahrzeug; der Fahrer kann somit mit dem Kraftfahrzeug besonders sicher rangieren, denn er kann besonders leicht einen Abstand zwischen dem Kraftfahrzeug und einem Hindernis ermitteln.

Während das Kraftfahrzeug entlang der Parkbahn bewegt wird, kann die Blickrichtung und/oder der Blickpunkt auch zumindest für einen Abschnitt der Parkbahn fortlaufend - d.h. zeitlich kontinuierlich - verändert werden. Diese Veränderung der Blickrichtung und/oder des Blickpunktes erfolgt auch vorzugsweise stetig, d.h. derart, dass der Fahrer keine sprunghafte Veränderung der Blickrichtung wahrnimmt. Eine solche Veränderung der Blickrichtung bzw. des Blickpunktes ist besonders benutzerfreundlich und sorgt außerdem dafür, dass der Fahrer stets die Orientierung in dem angezeigten Bild beibehalten kann. Die fortlaufende Veränderung der Blickrichtung und/oder des Blickpunktes kann beispielsweise in Abhängigkeit von einer aktuellen Geschwindigkeit des Kraftfahrzeugs und/oder in Abhängigkeit von einem Restweg der Parkbahn, d.h. einem noch verbleibenden Weg bis zur Endposition in der Parklücke, erfolgen. Insbesondere kann die Geschwindigkeit der fortlaufenden Veränderung der Blickrichtung und/oder des Blickpunktes in Abhängigkeit von der Geschwindigkeit des Kraftfahrzeugs und/oder in Abhängigkeit von dem Restweg eingestellt werden.

Anhand der Bilddaten und/oder anhand von Daten eines Abstandssensors - insbesondere eines Ultraschallsensors - kann das Fahrerassistenzsystem auch zumindest ein fahrzeugexternes Objekt detektieren. Dann kann dieses Objekt in dem angezeigten Bild zumindest bereichsweise durch ein vorbestimmtes Symbol überlagert bzw. durch dieses Symbol verdeckt werden. Somit können Objekte in der Umgebung des Kraftfahrzeugs hervorgehoben werden, sodass sie durch den Fahrer deutlich früher erkannt werden können.

Die Bilddaten werden durch zumindest eine optische Erfassungseinrichtung erfasst. Es erweist sich als besonders vorteilhaft, wenn die Bilddaten durch zumindest zwei, insbesondere durch zumindest drei, optische Erfassungseinrichtungen erfasst werden. Es können auch insgesamt vier optische Erfassungseinrichtungen vorgesehen sein. Es können also insgesamt mehrere Erfassungseinrichtung eingesetzt werden, nämlich eine Erfassungseinrichtung an einer linken Seitenflanke und/oder eine Erfassungseinrichtung an einem linken Außenspiegel und/oder eine Erfassungseinrichtung an einer rechten Seitenflanke und/oder eine Erfassungseinrichtung an einem rechten Außenspiegel und/oder eine Erfassungseinrichtung an einem vorderen Stoßfänger und/oder eine an einem hinteren Stoßfänger des Kraftfahrzeugs oder aber an einer Heckklappe. Insgesamt kann durch die Erfassungseinrichtungen ein 360°-Bild der Umgebung um das Kraftfahrzeug herum erfasst werden. Die zumindest eine Erfassungseinrichtung kann beispielsweise eine Kamera sein, nämlich insbesondere eine CMOS-Kamera (Complementary Metal Oxid Semiconductor) oder eine CCD-Kamera (Charge-coupled Device).

Vorzugsweise weist die zumindest eine optische Erfassungseinrichtung einen Erfassungswinkel aus einem Wertebereich von 170° bis 195° auf. Also ist die zumindest eine Erfassungseinrichtung vorzugsweise eine Fischaugenkamera. Auf diesem Wege gelingt es, mit lediglich drei oder vier Erfassungseinrichtungen die gesamte Umgebung um das Kraftfahrzeug herum zu erfassen. Das Fahrerassistenzsystem kommt also mit einer relativ geringen Anzahl der Erfassungseinrichtungen aus.

Darüber hinaus wird erfindungsgemäß ein Fahrerassistenzsystem für ein Kraftfahrzeug bereitgestellt; nämlich zur Unterstützung eines Parkvorgangs. Das Fahrerassistenzsystem umfasst zumindest eine optische Erfassungseinrichtung zum Erfassen von Bilddaten über eine Umgebung des Kraftfahrzeugs. Es umfasst auch eine Steuereinrichtung zum Bestimmen einer Parkbahn für den Parkvorgang und zum Verarbeiten der Bilddaten zu einem Bild, welches eine perspektivische Ansicht zumindest eines Umgebungsbereichs neben dem Kraftfahrzeug zeigt. Das Bild wird auf einer Anzeigeeinrichtung des Fahrerassistenzsystems angezeigt. Die Steuereinrichtung ist dazu ausgelegt, das Bild unter Berücksichtigung einer aktuellen Position des Kraftfahrzeugs auf der Parkbahn zu erzeugen.

Ein erfindungsgemäßes Kraftfahrzeug umfasst ein erfindungsgemäßes Fahrerassistenzsystem. Die mit Bezug auf das erfindungsgemäße Verfahren vorgestellten bevorzugten Ausführungsformen und deren Vorteile gelten entsprechend für das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung eine Draufsicht auf ein Kraftfahrzeug mit einem Fahrerassistenzsystem gemäß einer Ausführungsform der Erfindung;
- Fig. 2: in schematischer und perspektivischer Darstellung das Kraftfahrzeug gemäß Fig. 1, wobei die Erzeugung eines Bildes aus Bilddaten näher erläutert wird; und
- Fig. 3 bis 5: eine zeitliche Abfolge von Bildern, die während einer Vermessung einer Parklücke sowie während eines Parkvorgangs des Kraftfahrzeugs aus den Bilddaten erzeugt und angezeigt werden.

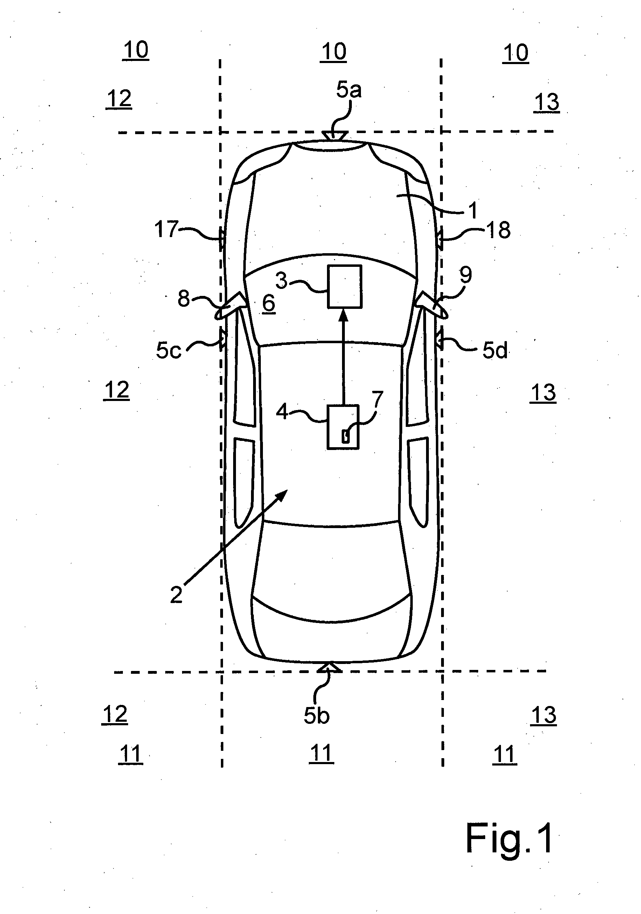

Ein Kraftfahrzeug 1, wie es in Fig. 1 dargestellt ist, ist ein Personenkraftwagen. Das Kraftfahrzeug 1 umfasst ein Fahrerassistenzsystem 2, welches folgende Komponenten umfasst: eine Anzeigeeinrichtung 3, eine Steuereinrichtung 4, wie auch vier Kameras 5a bis 5d. Die Steuereinrichtung 4 steuert die Anzeigeeinrichtung 3 an. Die Kameras 5a bis 5d übermitteln erfasste Bilddaten an die Steuereinrichtung 4, nämlich beispielsweise über einen internen Kommunikationsbus des Kraftfahrzeugs 1.

Die Anzeigeeinrichtung 3 kann beispielsweise ein LCD-Display sein. Sie kann aber auch ein Bildprojektor sein, mittels dessen Bilder auf eine Windschutzscheibe 6 des Kraftfahrzeugs 1 projiziert werden können (ein Head-up-Display).

In der Steuereinrichtung 4, nämlich in einem Speicher 7, ist ein Abbild des Kraftfahrzeugs 1 abgespeichert, und genauer gesagt Daten, die ein Abbild des Kraftfahrzeugs 1 repräsentieren.

Die Kameras 5a bis 5d sind an einer äußeren Oberfläche des Kraftfahrzeugs 1 angebracht. Die Anzahl sowie die Anordnung der Kameras 5a bis 5d ist in Fig. 1 lediglich beispielhaft dargestellt; je nach Ausführungsform kann die Anzahl der Kameras 5a bis 5d sowie deren Anordnung an dem Kraftfahrzeug 1 variieren. Im Ausführungsbeispiel ist eine erste Kamera 5a an einem vorderen Stoßfänger des Kraftfahrzeugs 1 angeordnet, während eine zweite Kamera 5b an einem hinteren Stoßfänger oder aber an einer Heckklappe angeordnet ist. Eine dritte Kamera 5c ist an der linken Seitenflanke angebracht; sie kann auch in einen linken Außenspiegel 8 integriert sein. Eine vierte Kamera 5d ist an der rechten Seitenflanke angebracht, nämlich im Bereich eines rechten Außenspiegels 9. Auch die vierte Kamera 5d kann in den Außenspiegel 9 integriert sein.

Die Kameras 5a bis 5d weisen jeweils einen breiten Erfassungswinkel auf und sind somit so genannte Fischaugenkameras. Zum Beispiel kann der jeweilige Erfassungswinkel in einem Wertebereich von 170° bis 195° liegen. Wie aus Fig. 1 hervorgeht, erfasst die erste Kamera 5a einen Bereich 10 vor dem Kraftfahrzeug 1, während die zweite Kamera 5b einen Bereich 11 hinter dem Kraftfahrzeug 1 erfasst. Entsprechend erfasst die dritte Kamera 5c einen Bereich 12 links neben dem Kraftfahrzeug 1; die vierte Kamera 5d erfasst einen Bereich 13 rechts neben dem Kraftfahrzeug 1. Die Kameras 5a bis 5d können also im Wesentlichen die gesamte Umgebung um das Kraftfahrzeug 1 herum erfassen, nämlich ein 360 °-Bild.

Die Steuereinrichtung 4 kann die durch die Kameras 5a bis 5d erfassten Bilddaten verarbeiten. Die Steuereinrichtung 4 kann anhand der Bilddaten ein Bild erzeugen, welches von oberhalb des Kraftfahrzeugs 1 eine Draufsicht auf die Umgebung des Kraftfahrzeugs 1 zeigt, nämlich auf die Erfassungsbereiche 10 bis 13. Die Steuereinrichtung 4 kann also aus den Bilddaten ein Bild erzeugen, welches aus einer Vogelperspektive eine Draufsicht auf die Erfassungsbereiche 10 bis 13 zeigt.

Wie bereits ausgeführt, ist in dem Speicher 7 ein Abbild des Kraftfahrzeugs 1 abgespeichert. Auch dieses Abbild zeigt das Kraftfahrzeug 1 aus einer Vogelperspektive; dieses Abbild zeigt mit anderen Worten eine Draufsicht auf das Kraftfahrzeug 1 von oberhalb desselben. Die Steuereinrichtung 4 kann aus dem Abbild des Kraftfahrzeugs 1 und dem anhand der Bilddaten erzeugten Abbild der Umgebung ein Umgebungsbild erzeugen, welches eine Draufsicht sowohl auf das Kraftfahrzeug 1 als auch auf die Umgebung um das Kraftfahrzeug 1 herum zeigt, nämlich aus einer Vogelperspektive. In einem einzigen Umgebungsbild werden somit sowohl die Umgebung des Kraftfahrzeugs 1 als auch das Kraftfahrzeug 1 selbst aus einer Vogelperspektive dargestellt. Dieses Umgebungsbild kann die Steuereinrichtung 4 auf der Anzeigeeinrichtung 3 anzeigen. Dieses Umgebungsbild kann kontinuierlich angezeigt werden; dies bedeutet, dass sich das Umgebungsbild fortlaufend bzw. dynamisch an die Umgebung des Fahrzeugs 1 anpassen kann. Die Bilddaten werden nämlich fortlaufend durch die Kameras 5a bis 5d erfasst, und das Umgebungsbild wird aus den fortlaufend erfassten Bilddaten dynamisch jeweils neu erzeugt. In dem Umgebungsbild kann das Kraftfahrzeug 1 ortsfest bzw. stationär gezeigt werden, während das Abbild der Umgebung stets aktualisiert und dynamisch angepasst werden kann.

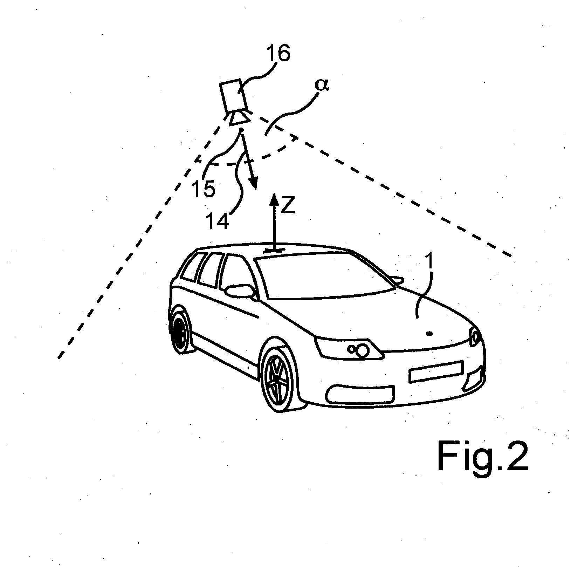

Also kann die Steuereinrichtung 4 ein Umgebungsbild erzeugen, welches in perspektivischer Darstellung von oberhalb des Kraftfahrzeugs 1 eine Draufsicht auf einen Umgebungsbereich neben dem Kraftfahrzeug sowie auf das Kraftfahrzeug zeigt. Ein solches Bild stellt das Kraftfahrzeug 1 sowie den Umgebungsbereich also aus einer Vogelperspektive dar. Wie in Fig. 2 gezeigt ist, kann die Steuereinrichtung 4 ein solches Bild erzeugen, welches die Draufsicht aus einer Blickrichtung 14 sowie aus einem Blickpunkt 15 einer virtuellen Kamera 16 darstellt. Es wird also ein solches Bild erzeugt, wie es mit Hilfe einer solchen Kamera 16 erzeugt werden würde. Die in Fig. 2 dargestellte Kamera 16 ist eine fiktive bzw. virtuelle Kamera, die in der Tat nicht existiert. Es werden lediglich die Bilddaten der Kameras 5a bis 5d derart verarbeitet, dass ein daraus erzeugtes Bild die Draufsicht aus der Blickrichtung 14 und dem Blickpunkt 15 der virtuellen Kamera 16 zeigt.

Es geht im Ausführungsbeispiel insbesondere um das Unterstützen des Fahrers beim Einparken des Kraftfahrzeugs 1 in eine Parklücke. Zu diesem Zwecke beinhaltet das Fahrerassistenzsystem 2 zwei Abstandssensoren 17, 18, nämlich insbesondere Ultraschallsensoren. Der erste Abstandssensor 17 ist an der linken Seitenflanke - zum Beispiel im linken Randbereich des vorderen Stoßfängers - angebracht, während der zweite Abstandssensor 18 symmetrisch an der gegenüberliegenden Seite des Kraftfahrzeugs 1 angeordnet ist. Die Unterstützung eines Parkvorgangs beinhaltet wenigstens, dass durch das Fahrerassistenzsystem 2 zunächst eine Parklücke erfasst wird und dann in Abhängigkeit von der aktuellen Position des Kraftfahrzeugs 1 relativ zur Parklücke eine Parkbahn berechnet wird, entlang welcher das Kraftfahrzeug 1 kollisionsfrei in die Parklücke eingeparkt werden kann. Die Erfassung bzw. Vermessung der Parklücke erfolgt in der Regel während einer Vorbeifahrt des Kraftfahrzeugs 1 an der Parklücke. Wird eine geeignete Parklücke erkannt, so wird der Fahrer darüber informiert, und er kann den Parkvorgang einleiten. Das Fahrerassistenzsystem 2 kann den Fahrer sowohl beim Einparken in eine Querparklücke als auch beim Einparken in eine Längsparklücke unterstützen.

Während der Vermessung der Parklücke sowie während des Parkvorgangs wird auf der Anzeigeeinrichtung 3 das Bild angezeigt, welches aus den fortlaufend erfassten Bilddaten kontinuierlich jeweils neu erzeugt wird. Dabei wird das Bild unter Berücksichtigung der jeweils augenblicklichen relativen Position des Kraftfahrzeugs bezüglich der Parklücke bzw. unter Berücksichtigung der aktuellen Position des Kraftfahrzeugs 1 auf der berechneten Parkbahn erzeugt. Und zwar wird im Ausführungsbeispiel die Blickrichtung 14, der Blickpunkt 15, wie auch die Größe des abgebildeten Umgebungsbereich - also ein virtueller Erfassungswinkel der virtuellen Kamera 16 - in Abhängigkeit von der jeweils augenblicklichen Position des Kraftfahrzeugs 1 relativ zur Parklücke bzw. der aktuellen Position des Kraftfahrzeugs 1 auf der berechneten Parkbahn eingestellt.

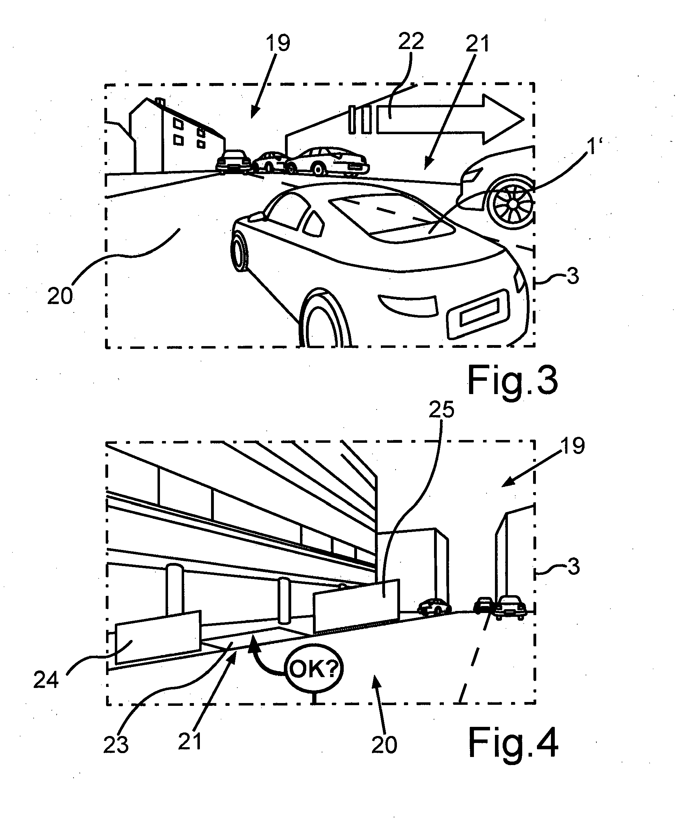

In den Figuren 3 bis 5 ist eine beispielhafte zeitliche Abfolge von Bildern 19 dargestellt, wie sie während eines Parkvorgangs auf der Anzeigeeinrichtung 3 dargestellt werden. In Fig. 3 ist das Kraftfahrzeug 1' sowie ein Umgebungsbereich 20 des Kraftfahrzeugs 1 aus einer perspektivischen Ansicht gezeigt. Das Kraftfahrzeug 1' fährt an einer Reihe von anderen Kraftfahrzeugen vorbei. Auf der rechten Seite des Kraftfahrzeugs 1' befindet sich eine Parklücke 21, die mit Hilfe des Abstandssensors 18 vermessen wird. In dem Bild 19 gemäß Fig. 3 wird das Kraftfahrzeug 1' ortsfest bzw. stationär dargestellt, während der Umgebungsbereich 20 fortlaufend aus den kontinuierlich erfassten Bilddaten jeweils neu erzeugt wird. Es bewegt sich also der Umgebungsbereich 20 im Bild 19, nämlich auch die Reihe von anderen Kraftfahrzeugen, wie anhand einer Pfeildarstellung 22 dargestellt. Im Bild 19 gemäß Fig. 3 ist das Kraftfahrzeug 1' sowie der Umgebungsbereich 20 aus einem Blickpunkt 15 gezeigt, welcher hinter dem Kraftfahrzeug 1' liegt. Des Weiteren weist die Blickrichtung 14 im Wesentlichen in die Fahrtrichtung des Kraftfahrzeugs 1. Genauer gesagt beinhaltet die Blickrichtung 14 eine Richtungskomponente der Fahrtrichtung sowie eine Richtungskomponente der rechten Querhalbachse des Kraftfahrzeugs 1. Auf diese Weise kann die vor dem Kraftfahrzeug 1 befindliche Parklücke 21 abgebildet werden.

Fährt das Kraftfahrzeug 1 an der Parklücke 21 vorbei, so kann diese Parklücke 21 mit Hilfe des Abstandssensors 18 vermessen werden. Ist diese Parklücke 21 für das Einparken geeignet, so wird der Fahrer darüber informiert. Im Bild 19 gemäß Fig. 4 befindet sich die Parklücke 21 bereits hinter dem Kraftfahrzeug 1. Weil diese Parklücke 21 für das Einparken geeignet ist, wird nun die Blickrichtung 14 stetig verändert, und die Parklücke 21 wird in perspektivischer Darstellung angezeigt. Der Fahrer wird mit Hilfe des Bildes 19 gefragt, ob der Parkvorgang eingeleitet werden soll oder nicht. Im Bild 19 gemäß Fig. 4 befindet sich das Kraftfahrzeug 1 also in einem Anfangsbereich der berechneten Parkbahn. In diesem Fall zeigt die Blickrichtung 14 in Richtung der Parkbahn 21. Der Blickpunkt 15 kann entweder hinter dem Kraftfahrzeug 1 oder über dem Kraftfahrzeug 1 oder aber vor dem Kraftfahrzeug 1 liegen.

Die Parklücke 21 ist im Bild 19 gemäß Fig. 4 mit Hilfe eines Symbols 23 hervorgehoben. Auch die anderen Kraftfahrzeuge, die die Parklücke 21 unmittelbar begrenzen, werden jeweils mit einem Symbol 24, 25 überlagert bzw. verdeckt. Somit werden diese Kraftfahrzeuge auch hervorgehoben.

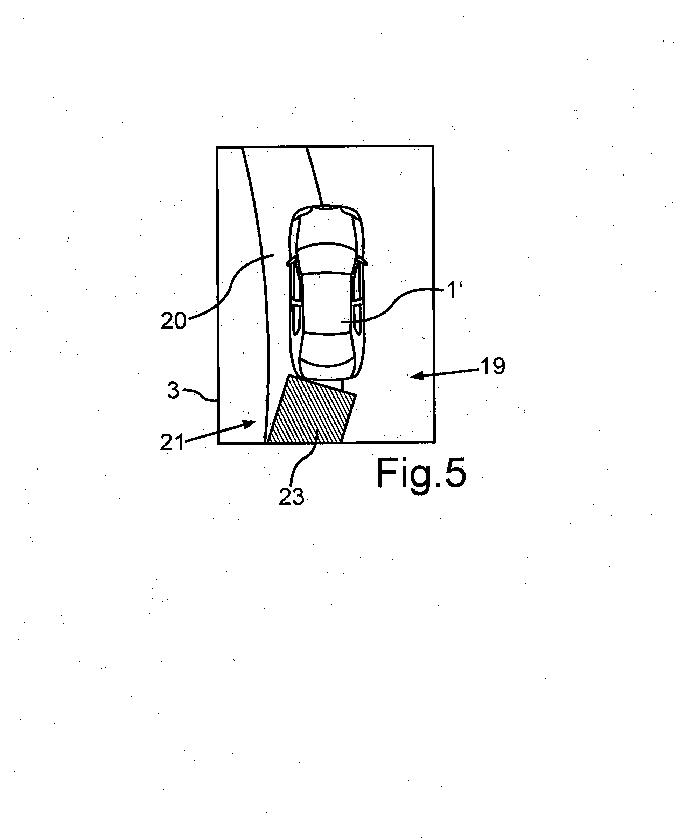

Gelangt das Kraftfahrzeug 1 in einen vorgegebenen Endbereich der Parkbahn bzw. unterschreitet ein Restweg der Parkbahn ein vorgegebenes Minimum, so werden die Blickrichtung 14 sowie der Blickpunkt 15 dahingehend verändert, dass sie mit der Fahrzeughochachse z (Fig. 2) zusammenfallen. Ein solches Bild 19 aus dieser Blickrichtung 14 ist in Fig. 5 dargestellt. Das Bild 19 gemäß Fig. 5 zeigt also eine Draufsicht auf das gesamte Kraftfahrzeug 1' sowie den Umgebungsbereich 20 aus einem rechten Winkel bezüglich der Bildebene. Der Fahrer kann somit anhand dieses Bildes 19 besonders leicht auf die Abstände zwischen dem Kraftfahrzeug 1 und fahrzeugexternen Hindernissen zurück schließen. Auch im Bild 19 gemäß Fig. 5 wird das Kraftfahrzeug 1' ortsfest dargestellt, während der Umgebungsbereich 20 aus den fortlaufend erfassten Bilddaten jeweils neu abgebildet wird.

Ein Wechsel von dem Bild 19 gemäß Fig. 3 über das Bild 19 gemäß Fig. 4 zum Bild 19 gemäß Fig. 5 erfolgt im Ausführungsbeispiel stetig, nämlich derart, dass der Fahrer keine Sprünge in dem Bild 19 wahrnimmt. Der Übergang erfolgt also sprungfrei. Dies bedeutet, dass die Blickrichtung 14 und der Blickpunkt 15 stetig verändert werden. Es kann auch vorgesehen sein, dass die Blickrichtung 14 und/oder der Blickpunkt 15 für zumindest einen Abschnitt der Parkbahn zeitlich kontinuierlich verändert wird/werden. Die Geschwindigkeit dieser Veränderung kann beispielsweise in Abhängigkeit von der jeweils aktuellen Geschwindigkeit des Kraftfahrzeugs 1 und/oder von dem Restweg der Parkbank bzw. dem Abstand zwischen dem Kraftfahrzeug 1 und einer Endposition in der Parklücke 21 eingestellt werden.

## Patentansprüche

1. Verfahren zur Unterstützung eines Parkvorgangs eines Kraftfahrzeugs (1) mittels eines Fahrerassistenzsystems (1) durch
- Erfassen einer Parklücke während einer Vorbeifahrt des Kraftfahrzeugs an der Parklücke,
- Bestimmen einer Parkbahn, entlang welcher das Kraftfahrzeug (1) in die Parklücke (21) eingeparkt oder aus der Parklücke (21) ausgeparkt wird,
- Erfassen von Bilddaten über eine Umgebung (10 bis 13) des Kraftfahrzeugs (1) durch zumindest eine optische Erfassungseinrichtung (5a bis 5d) des Fahrerassistenzsystems (1),
- Verarbeiten der Bilddaten zu einem Bild (19), welches eine perspektivische, Ansicht zumindest eines Umgebungsbereichs (20) neben dem Kraftfahrzeug (1) zeigt, und Anzeigen des Bildes (19) auf einer Anzeigeeinrichtung (3),
wobei das Bild (19) unter Berücksichtigung einer aktuellen Position des Kraftfahrzeugs (1) auf der Parkbahn erzeugt wird,
und wobei eine Blickrichtung (14) und/oder ein Blickpunkt (15), aus welcher bzw. welchem die perspektivische Ansicht gezeigt wird, in Abhängigkeit von der aktuellen Position des Kraftfahrzeugs (1) auf der Parkbahn eingestellt wird, und/oder eine Größe des abgebildeten Umgebungsbereichs (20) in Abhängigkeit von der aktuellen Position des Kraftfahrzeugs (1) auf der Parkbahn eingestellt wird.

2. Verfahren nach Anspruch 1,
**dadurch gekennzeichnet, dass**
die Bilddaten derart verarbeitet werden, dass das Bild (19) von oberhalb des Kraftfahrzeugs (1) eine Draufsicht zumindest auf den Umgebungsbereich (20) neben dem Kraftfahrzeug (1) zeigt.

3. Verfahren nach einem der vorhergehenden Ansprüche,
**dadurch gekennzeichnet, dass**
für zumindest einen Abschnitt der Parkbahn das Bild (19) zusätzlich zu dem Umgebungsbereich (20) auch zumindest einen Bereich des Kraftfahrzeugs (1') zeigt.

4. Verfahren nach Anspruch 3,
**dadurch gekennzeichnet, dass**
in dem angezeigten Bild (19) das Abbild des Kraftfahrzeugs (1') ortsfest dargestellt wird, während das Abbild des Umgebungsbereichs (20) aus den Bilddaten jeweils neu erzeugt wird.

5. Verfahren nach einem der vorhergehenden Ansprüche,
**dadurch gekennzeichnet, dass**
während des Vorgangs des Erfassens der Parklücke (21) während der Vorbeifahrt des Kraftfahrzeugs (1) an der Parklücke (21), die perspektivische Ansicht aus einer solchen Blickrichtung (14) gezeigt wird, die eine Richtungskomponente einer Fahrtrichtung des Kraftfahrzeugs (1) und eine Richtungskomponente einer, insbesondere rechten, Querhalbachse des Kraftfahrzeugs (1) aufweist.

6. Verfahren nach einem der vorhergehenden Ansprüche,
**dadurch gekennzeichnet, dass**
dann, wenn sich das Kraftfahrzeug (1) in einem Anfangsbereich der Fahrbahn befindet, die perspektivische Ansicht aus einer solchen Blickrichtung (14) gezeigt wird, die in Richtung eines Endes der Parkbahn zeigt.

7. Verfahren nach einem der vorhergehenden Ansprüche,
**dadurch gekennzeichnet, dass**
dann, wenn ein Restweg der Parkbahn ein vorgegebenes Minimum unterschreitet, die perspektivische Ansicht aus einer solchen Blickrichtung (14) gezeigt wird, die mit einer Fahrzeughochachse (z) zusammenfällt.

8. Verfahren nach einem der vorhergehenden Ansprüche,
**dadurch gekennzeichnet, dass**
während das Kraftfahrzeug (1) entlang der Parkbahn bewegt wird, eine Blickrichtung (14) und/oder ein Blickpunkt (15), aus welcher bzw. welchem die perspektivische Ansicht gezeigt wird, zumindest für einen Abschnitt der Parkbahn fortlaufend, insbesondere in Abhängigkeit von einer aktuellen Geschwindigkeit des Kraftfahrzeugs (1) und/oder in Abhängigkeit von einem Restweg der Parkbahn, verändert wird/werden.

9. Verfahren nach einem der vorhergehenden Ansprüche,
**dadurch gekennzeichnet, dass**
die Bilddaten durch zumindest zwei, insbesondere zumindest drei, optische Erfassungseinrichtungen (5a bis 5d) erfasst werden.

10. Verfahren nach einem der vorhergehenden Ansprüche,
**dadurch gekennzeichnet, dass**
die zumindest eine optische Erfassungseinrichtung (5a bis 5d) einen Erfassungswinkel aus einem Wertebereich von 170° bis 195° aufweist.

11. Fahrerassistenzsystem (1) für ein Kraftfahrzeug (1), zur Unterstützung eines Parkvorgangs in eine Parklücke, wobei die Parklücke während einer Vorbeifahrt des Kraftfahrzeugs an der Parklücke erfasst wird, mit:
- zumindest einer optischen Erfassungseinrichtung (5a bis 5d) zum Erfassen von Bilddaten über eine Umgebung (10 bis 13) des Kraftfahrzeugs (1),
- einer Steuereinrichtung (4) zum Bestimmen einer Parkbahn für den Parkvorgang und zum Verarbeiten der Bilddaten zu einem Bild (19), welches eine perspektivische Ansicht zumindest eines Umgebungsbereichs (20) neben dem Kraftfahrzeug (1) zeigt, und
- einer Anzeigeeinrichtung (3) zum Anzeigen des Bildes (19),
wobei die Steuereinrichtung (4) dazu ausgelegt ist, das Bild (19) unter Berücksichtigung einer aktuellen Position des Kraftfahrzeugs (1) auf der Parkbahn zu erzeugen,
und wobei die Steuereinrichtung (4) dazu ausgelegt ist, eine Blickrichtung (14) und/oder einen Blickpunkt (15), aus welcher bzw. welchem die perspektivische Ansicht gezeigt wird, in Abhängigkeit von der aktuellen Position des Kraftfahrzeugs (1) auf der Parkbahn einzustellen und/oder eine Größe des abgebildeten Umgebungsbereichs (20) in Abhängigkeit von der aktuellen Position des Kraftfahrzeugs (1) auf der Parkbahn einzustellen.

12. Kraftfahrzeug (1) mit einem Fahrerassistenzsystem (1) nach Anspruch 11.

## Claims

1. Method for assisting in a parking operation for a motor vehicle (1) using a driver assistance system (1) by
- capturing a parking space while the motor vehicle is passing the parking space,
- determining a parking path along which the motor vehicle (1) is parked into the parking space (21) or driven out of the parking space (21),
- capturing image data about surroundings (10 to 13) of the motor vehicle (1) by means of at least one optical capture device (5a to 5d) of the driver assistance system (1),
- processing the image data to produce an image (19) which shows a perspective view of at least one surrounding area (20) next to the motor vehicle (1), and displaying the image (19) on a display device (3),
the image (19) being produced by taking account of a current position of the motor vehicle (1) on the parking path,
and a direction of view (14) and/or a field of view (15) from which the perspective view is shown being set on the basis of the current position of the motor vehicle (1) on the parking path, and/or a size of the mapped surrounding area (20) being set on the basis of the current position of the motor vehicle (1) on the parking path.

2. Method according to Claim 1,
**characterized in that**
the image data are processed such that the image (19) shows a plan view of at least the surrounding area (20) next to the motor vehicle (1) from above the motor vehicle (1).

3. Method according to one of the preceding claims,
**characterized in that**
for at least one section of the parking path the image (19) also shows at least one area of the motor vehicle (1') in addition to the surrounding area (20).

4. Method according to Claim 3, **characterized in that** the map of the motor vehicle (1') is presented at a fixed location in the displayed image (19), while the map of the surrounding area (20) is produced from the image data afresh each time.

5. Method according to one of the preceding claims,
**characterized in that**
during the operation of capturing the parking space (21) while the motor vehicle (1) is passing the parking space (21), the perspective view is shown from such a direction of view (14) as has a direction component for a direction of travel of the motor vehicle (1) and a direction component for an, in particular right-hand, transverse half-axis of the motor vehicle (1).

6. Method according to one of the preceding claims,
**characterized in that**
when the motor vehicle (1) is in an initial area of the carriageway, the perspective view is shown from such a direction of view (14) as points in the direction of an end of the parking path.

7. Method according to one of the preceding claims,
**characterized in that**
when a remaining distance for the parking path is below a prescribed minimum, the perspective view is shown from such a direction of view (14) as coincides with a vehicle vertical axis (z).

8. Method according to one of the preceding claims,
**characterized in that**
while the motor vehicle (1) is being moved along the parking path, a direction of view (14) and/or a field of view (15) from which the perspective view is shown is/are altered progressively for at least a section of the parking path, particularly on the basis of the current speed of the motor vehicle (1) and/or on the basis of a remaining distance for the parking path.

9. Method according to one of the preceding claims,
**characterized in that**
the image data are captured by at least two, particularly at least three, optical capture devices (5a to 5d).

10. Method according to one of the preceding claims,
**characterized in that**
the at least one optical capture device (5a to 5d) has a capture angle from a range of values from 170° to 195°.

11. Driver assistance system (1) for a motor vehicle (1), for assisting in a parking operation into a parking space, the parking space being captured while the motor vehicle is passing the parking space, having:
- at least one optical capture device (5a to 5d) for capturing image data about surroundings (10 to 13) of the motor vehicle (1),
- a control device (4) for determining a parking path for the parking operation and for processing the image data to produce an image (19) which shows a perspective view of at least one surrounding area (20) next to the motor vehicle (1), and
- a display device (3) for displaying the image (19),
the control device (4) being designed to produce the image (19) by taking account of a current position of the motor vehicle (1) on the parking path,
and the control device (4) being designed to set a direction of view (14) and/or a field of view (15) from which the perspective view is shown on the basis of the current position of the motor vehicle (1) on the parking path and/or a size of the mapped surrounding area (20) on the basis of the current position of the motor vehicle (1) on the parking path.

12. Motor vehicle (1) having a driver assistance system (1) according to Claim 11.

## Revendications

1. Procédé d'assistance à une manoeuvre de stationnement d'un véhicule automobile (1) au moyen d'un système (1) d'assistance au conducteur, par
saisie d'un emplacement de stationnement pendant que le véhicule automobile passe le long de l'emplacement de stationnement,
détermination d'un parcours de stationnement le long duquel le véhicule automobile (1) est manoeuvré jusque dans l'emplacement de stationnement (21) ou hors de l'emplacement de stationnement (21),
saisie de données d'images concernant l'emplacement (10 à 13) du véhicule automobile (1) par au moins un dispositif (5a à 5d) de saisie optique du système (1) d'assistance au conducteur,
transformation des données d'images en une image (19) qui donne une vue en perspective d'au moins une zone environnante (20) située à côté du véhicule automobile (1) et affichage de l'image (19) sur un dispositif d'affichage (3),
l'image (19) étant formée en tenant compte de la position effective du véhicule automobile (1) sur le parcours de stationnement,
la direction d'observation (14) ou un point d'observation (15) depuis laquelle ou lequel la vue en perspective est affichée étant établis en fonction de la position effective du véhicule automobile (1) sur le parcours de stationnement et/ou
la taille de la zone environnante (20) dont l'image est formée étant ajustée en fonction de la position effective du véhicule automobile (1) sur le parcours de stationnement.

2. Procédé selon la revendication 1, **caractérisé en ce que** les données d'images sont traitées de telle sorte que l'image (19) donne une vue en plan depuis le haut du véhicule automobile (1) au moins de la zone environnante (20) située à côté du véhicule automobile (1).

3. Procédé selon l'une des revendications précédentes, **caractérisé en ce que** pour au moins une partie de parcours de stationnement, l'image (19) indique en plus une partie du véhicule automobile (1') en plus de la zone environnante (20).

4. Procédé selon la revendication 3, **caractérisé en ce que** dans l'image (19) affichée, le véhicule automobile (1') est représenté en position fixe alors que l'image de la partie environnante (20) est reformée à partir des données d'images.

5. Procédé selon l'une des revendications précédentes, **caractérisé en ce que** pendant l'opération de saisie de l'emplacement de stationnement (21) pendant que le véhicule automobile (1) passe le long de l'emplacement de stationnement (21), la vue en perspective est donnée à partir d'une direction d'observation (14) qui présente une composante d'orientation de la direction de déplacement du véhicule automobile (1) et une composante d'orientation d'un demi-axe transversal du véhicule automobile (1), en particulier du demi-axe transversal droit.

6. Procédé selon l'une des revendications précédentes, **caractérisé en ce que** si le véhicule automobile (1) se trouve dans une partie initiale du parcours de conduite, la vue en perspective est donnée depuis une direction d'observation (14) qui vise la direction de l'extrémité du parcours de stationnement.

7. Procédé selon l'une des revendications précédentes, **caractérisé en ce que** si la partie restante du parcours de stationnement n'atteint pas un minimum prédéterminé, la vue en perspective est donnée depuis une direction d'observation (14) qui coïncide avec l'axe vertical (z) du véhicule.

8. Procédé selon l'une des revendications précédentes, **caractérisé en ce que** pendant que le véhicule automobile (1) est déplacé sur le parcours de stationnement, une direction d'observation (14) et/ou un point d'observation (15) depuis laquelle ou depuis lequel la vue en perspective est affichée, au moins pour une partie du parcours de stationnement, la vue est modifiée en permanence en particulier en fonction de la vitesse effective du véhicule automobile (1) et/ou en fonction du reste du parcours de stationnement.

9. Procédé selon l'une des revendications précédentes, **caractérisé en ce que** les données d'images sont saisies par au moins deux et en particulier au moins trois dispositifs optiques de saisie (5a à 5d).

10. Procédé selon l'une des revendications précédentes, **caractérisé en ce qu'**au moins un dispositif optique de saisie (5a à 5d) présente un angle de saisie compris dans une plage de 170° à 195°.

11. Système (1) d'assistance au conducteur d'un véhicule automobile (1) en vue d'assister à une opération de stationnement dans un emplacement de stationnement, l'emplacement de stationnement étant saisi pendant que le véhicule automobile passe le long de l'emplacement de stationnement, le système présentant :
au moins un dispositif optique de saisie (5a à 5d) qui saisit des données d'images concernant l'environnement (10 à 13) du véhicule automobile (1),
un dispositif de commande (4) qui détermine un parcours de stationnement pour l'opération de stationnement et qui traite des données d'images en une image (19) qui donne une vue en perspective d'au moins une partie environnante (20) située à côté du véhicule automobile (1) et
un dispositif d'affichage (3) qui affiche l'image (19),
le dispositif de commande (4) étant conçu pour former l'image (19) en tenant compte de la position effective du véhicule automobile (1) sur le parcours de stationnement,
le dispositif de commande (4) étant conçu pour établir la direction d'observation (14) ou un point d'observation (15) depuis laquelle ou lequel la vue en perspective est affichée en fonction de la position effective du véhicule automobile (1) sur le parcours de stationnement et/ou pour ajuster la taille de la zone environnante (20) dont l'image est formée en fonction de la position effective du véhicule automobile (1) sur le parcours de stationnement.

12. Véhicule automobile (1) doté d'un système (1) d'assistance au conducteur selon la revendication 11.
